# EUROPEAN PATENT SPECIFICATION

(11) **EP 2 475 936 B1**
(45) Date of publication and mention of the grant of the patent: **20.04.2016**
(21) Application number: 10813905.6
(22) Date of filing: 27.08.2010
(51) Int. Cl.: A01M 1/02, A01M 1/22, F24F 1/00, F24F 3/16, A01M 29/18, A01M 1/04

(54) **AIR CONDITIONER**
KLIMAANLAGE
CLIMATISEUR

(30) Priority: 07.09.2009 KR 20090084083
(43) Date of publication of application: 18.07.2012
(73) Proprietor: LG Electronics Inc., Yeongdeungpo-Gu Seoul 07336 (KR)
(72) Inventor: LEE, Dong Won, Changwon-si Gyeongsangnam-do 641-711 (KR); PARK, Sung Kwan, Changwon-si Gyeongsangnam-do 641-711 (KR); KIM, Jae Hong, Changwon-si Gyeongsangnam-do 641-711 (KR); KIM, Jeong Young, Changwon-si Gyeongsangnam-do 641-711 (KR); KIM, Ill Uk, Changwon-si Gyeongsangnam-do 641-711 (KR); PARK, Kwa Jin, Changwon-si Gyeongsangnam-do 641-711 (KR)
(74) Representative: Ter Meer Steinmeister & Partner
(86) International application number: PCT/KR2010/005768
(87) International publication number: WO 2011/027996

(56) References cited:
- EP-A1- 1 772 187
- EP-A1- 1 772 187
- WO-A2-2008/052217
- JP-A- 2003 014 267
- US-A1- 2004 170 537
- US-A1- 2007 006 520
- US-A1- 2007 060 036
- US-A1- 2008 181 352

## Description

### Technical Field

The present invention relates to an air conditioner that can maintain the ambient air of a specific space (or area) to a pleasant state by adequately adjusting the temperature, humidity, and air current distribution within the corresponding space (or area) to allow people to pleasantly carry out their everyday activities.

### Background Art

Generally, an air conditioner maintains the atmosphere (or ambient air) of a particular space (or area) to a pleasant state by performing cooling and heating function, wherein the air conditioner uses boiling heat or condensation heat of a refrigerant to transfer a cool (or low-temperature) heat source to a heated (or high-temperature) heat source, or to transfer a heated (or high-temperature) heat source to a cool (or low-temperature) heat source, an air purifying (or cleaning) function, wherein the air conditioner purifies (or cleans) polluted air to send out fresh and clean air, and an air circulating function, wherein the air conditioner switches the inside air to and from the outside air.

The above-described air conditioner performs its air-conditioning function within a closed indoor space. At this point, when an insect (or pest) enters the closed space from the outside, the insect may pollute (or contaminate) the indoor environment, thereby causing disease or illness to be spread among the people sharing the corresponding space. During the summer season, when the temperatures are high, people may be infected with highly critical mosquito-borne diseases, such as malaria or the Dengue fever. Most particularly, since the Dengue fever, which is infected by the Dengue mosquito, causes extreme pain and is highly fatal when infected, efforts in trying to prevent such diseases from spreading are required to be made on a nationwide-basis.

However, when using insect repellants or extermination products, such as pesticides or insecticides, in order to repel such insects including mosquitoes, the indoor air (or atmosphere) may be contaminated (or polluted) with the same insect-repellant, thereby decreasing the cleaning (or purifying) efficiency of the air conditioner. On the other hand, when no other separate insect repelling products are used, the insects may contaminate the indoor atmosphere by spreading the diseases they are carrying.

Furthermore, generally, even if a structure for repelling insects (hereinafter referred to as an"insect repelling unit") is added to the air conditioner, such structure is provided in way that the insect repelling unit is exposed to the indoor space. And, in this case, when the air conditioner is turned off, impurities, such as dust or water, may flow into the insect repelling unit, thereby damaging the air conditioner. Also, due to the additional structure of the insect repelling unit, the outside features of the air conditioner may seem more complex.

JP 2003 014267 A discloses an air-cleaner having an ultrasonic generator for generating ultrasonic wave for getting rid of harmful insects.

### Disclosure of Invention

### Technical Problem

Accordingly, the present invention is directed to an air conditioner that substantially obviates one or more problems due to limitations and disadvantages of the related art.

Another object of the present invention is to provide an air conditioner that can eliminate (or repel) unwanted insects without degrading the air purifying function of the air conditioner.

A further object of the present invention is to provide an air conditioner that can eliminate (or repel) unwanted insects by attracting the insects into the main body of the air conditioner.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

### Solution to Problem

The object is solved by the features of the independent claim 1. Preferred embodiments are defined in the dependent claims.

To achieve these objects and other advantages and in accordance with the purpose of the invention, as embodied and broadly described herein, an air conditioner preferably includes a main body including an air inlet for drawing in external air and an air outlet for dis-charging conditioned air to the outside, an insect attracting unit provided in the main body and configured to attract unwanted insects to the main body, an ultrasonic generator provided in the main body and generating ultrasonic waves towards the attracted insects by using an oscillation of a piezoelectric element, and a controller controlling the insect attracting unit and the ultrasonic generator.

In another aspect of the present invention, an air conditioner includes a main body including an air inlet for drawing in external air and an air outlet for discharging conditioned air to the outside, a duct opening one side of the main body and provided inside the main body, an insect attracting unit being provided on one side of the duct and configured to attract unwanted insects into the duct, and an ultrasonic generator provided in the main body and generating ultrasonic waves into an inner space within the duct by using an oscillation of a piezoelectric element.

It is to be understood that both the foregoing general description and the following detailed description of the present invention are exemplary and explanatory and are intended to provide further explanation of the invention as claimed.

### Advantageous Effects of Invention

As described above, the air conditioner according to the present invention can protect the human body from unwanted insects or pests while maintaining the air within the indoor space to a clean state.

### Brief Description of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a perspective view showing a structure of an air conditioner according to a preferred embodiment of the present invention;
FIG. 2 illustrates a dispersed perspective view of the structure according to an embodiment of the present invention;
FIG. 3 illustrates a controlled block view showing a controlled structure according to the embodiment of the present invention;
FIG. 4 illustrates a partial perspective view showing a detachably fixed structure of a collecting box according to an embodiment of the present invention;
FIG. 5 illustrates a partial cross-sectional view of an insect (or pest) attracting device according to an embodiment of the present invention, wherein the insect attracting device has a carbon dioxide generator mounted therein;
FIG. 6 illustrates a partial cross-sectional view of an insect (or pest) attracting device according to an embodiment of the present invention, wherein the insect attracting device has a light-emitting diode mounted therein;
FIG. 7 illustrates a partial cross-sectional view of a collection box having insects trapped therein according to an embodiment of the present invention;
FIG. 8 illustrates a cross-sectional view showing an insect (or pest) attracting/ eliminating device according to another embodiment of the present invention; and
FIG. 9 illustrates a partial cross-sectional view of a collection box having insects trapped therein according to another embodiment of the present invention.

### Best Mode for Carrying out the Invention

In the following detailed description, reference is made to the accompanying drawing from a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

In the following description of the present invention, the air conditioner may include an air conditioner, a ventilator, an air cleaner, and so on.

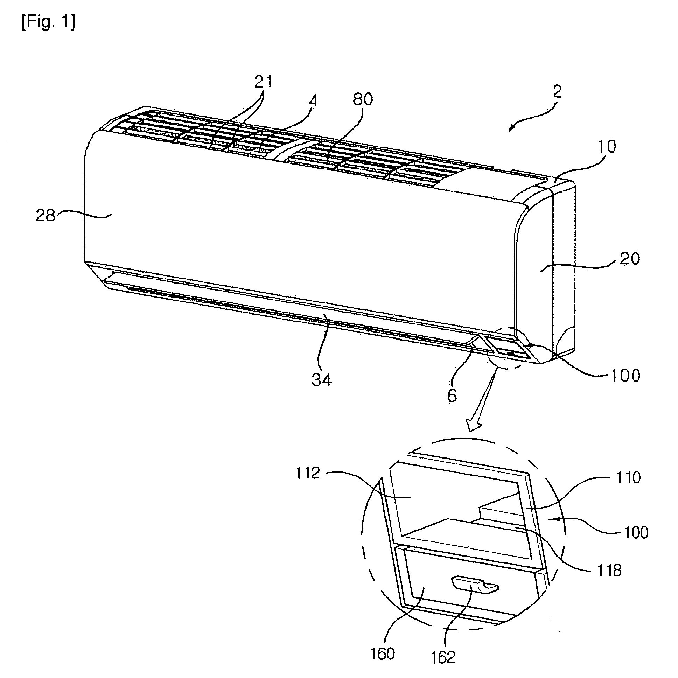

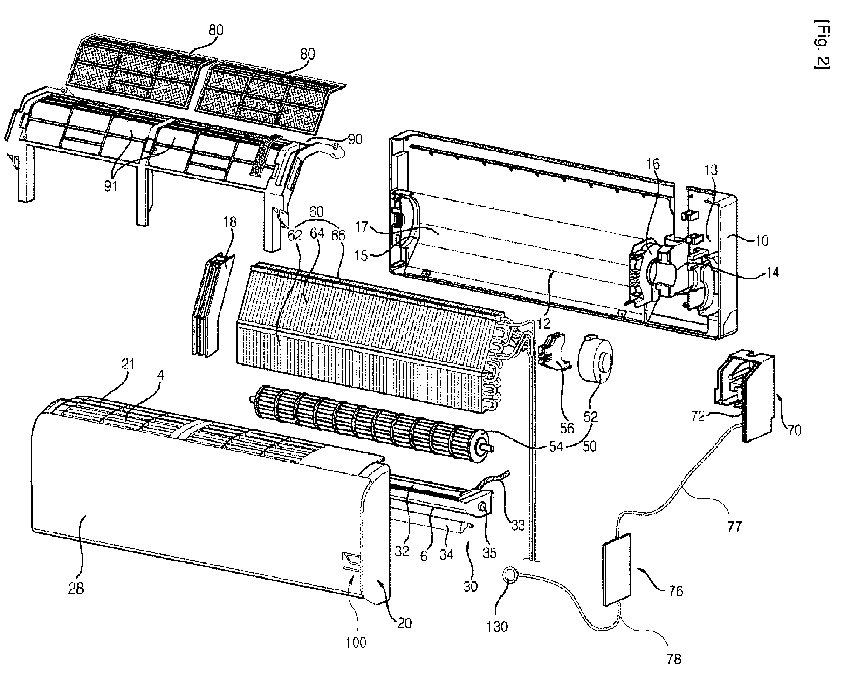

FIG. 1 illustrates a perspective view showing a structure of an air conditioner according to a preferred embodiment of the present invention. And, FIG. 2 illustrates a dispersed perspective view showing a structure according to an embodiment of the present invention.

Referring to FIG. 1 and FIG. 2, the air conditioner according to the embodiment of the present invention includes a main body 2 and an insect attracting/eliminating unit 100. More specifically, the main body 2 sucks-in ambient air so as to condition (*i.e.,* heat or cool) the inlet air and to discharge the conditioned air. The insect attracting/ eliminating unit 100 installed in the main body 2 and configured to attract and eliminate unwanted insects or pests.

In the main body 2, an air inlet 4 for sucking-in air and an air outlet 6 for outputting (or expel) air are formed.

More specifically, the main body 2 corresponds to an air conditioning unit, which sucks-in air through the air inlet 4, so as to internally condition (*i.e.,* heat or cool) the sucked-in air, thereby outputting the conditioned air through the air outlet 6. Herein, the air conditioning unit may be configured in diverse forms, such as a standing-type air conditioner, a ceiling-embedded air conditioner, or a wall-mounted type air conditioner. Hereinafter, the wall-mounted type air conditioner will be given as an example in the detailed description of the present invention for simplicity.

The main body 2 includes a sash 10, a front frame 20, a suction grill 21, a front panel 28, and an outlet unit 30.

In addition to the air inlet 4 being formed on the front surface and upper surface of the main body 2, the air outlet 6 may be formed on the lower surface of the main body 2. And, the front panel 28 may be projected to a forward direction or may be pivoted to an upper direction or a lower direction, so as to configure an air suction path between the front panel 28 and the front surface of the main body 2.

The main body 2 may be configured so that the air inlet 4 is formed on the upper surface of the main body 2 and that the air outlet 6 is formed on the lower surface of the main body 2. And, the front panel 28 may be positioned to cover the entire surface of the main body 2.

Hereinafter, in the description of the air conditioner according to the present invention, the main body 2 will be described to be configured of an air inlet 4 being formed on the upper portion of the main body 2 and, most particularly, to the upper surface of the main body 2, and of an air outlet 6 being formed on the lower portion of the main body 2 and, most particularly, to the lower surface of the main body 2. Also, in addition to configuring the front area of the outside features of the air conditioner according to the present invention, the front panel 28 is formed to pivot along the axis of the front panel 28 in a forward direction, so as to service the inside of the main body 2.

While being mounted on a wall of an indoor space (or area), the sash 10 consists of a case having an air-flow passage allowing air to pass through formed therein and having diverse elements equipped therein.

The sash 10 includes an air-flow passage guide 12 guiding the air sucked-in through the air inlet 4 to the air outlet 6, and an electric machinery room 13 having various types of electric machinery assembly parts equipped on any one of the left and right sides of the air-flow passage guide 12.

The air-flow passage guide 12 configures a path of a fan 54. Herein, the air-flow passage guide 12 includes left and right guides 15 and 16 each being protruded forward from the sash 10, and a center guide 17 between the left and right guides 15 and 16.

A heat exchanger supporter 18, which supports a heat exchanger 60 and also creates an air path, is equipped on any one of the left and right guides 15 and 16.

A fan motor 52 is fixed to the electric machinery room 13, wherein a motor installing unit 14 is formed to be protruded in a forward direction. Herein, the fan motor 52 will be described in a later process.

A controller 70 controlling the air conditioner is installed in the electric machinery room 13 of the sash 10. Herein, the controller 70 will also be described in detail in a later process.

A front frame 20 forms an empty space between the front frame 20 and the sash 10. And, the front frame 20 is placed in front of the sash 10.

The front frame 20 creates an air-flow path along with the air-flow passage guide 12 and also covers the electric machinery room 13 formed in the sash 10 so as to protect the electric machinery room 13.

The front frame 20 has openings respectively formed on the top side and the front side, wherein the top side opening functions as the air inlet 4, and wherein the front side opening functions as a service hole for the mounting/dismounting or servicing of a filter 80, which is to be described in a later process.

The front frame 20 includes front openings 5 that are formed in the front of the air-flow passage guide 12 of the sash 10, so as to be opened back and forth, and also formed on the upper front side of the air-flow passage guide 12 of the sash 10, so as to be opened up and down.

An inlet grill 21 allows the indoor (or room) air to be sucked into the main body 2 and to protect the lower portion (or surface) of the main body 2. The inlet grill 21 is formed in a grill shape in the air inlet 4, which corresponds to the top side opening of the front frame 20.

An outlet unit 30 guides the conditioned air to be discharged to the outside from the inside of the main body 2 through the air outlet 6. Herein, the outlet unit 30 is fastened to at least one of the sash 10 and the front frame 20 with a fastening means, such as a fastening member, or with a hooking means, such as a hook.

The outlet unit 30 includes a drain unit 32 collecting the condensed water dropping from the heat exchanger 60, which will be described in detail in a later process, on the upper portion of the outlet unit 30. The drain unit 32 is connected to a drain connection hose 33 guiding the condensed water outside of the main body 2. And, the air outlet 6 is openly formed on the lower portion of the drain unit 32.

Also, an air-flow direction controller controlling the direction of the air passing through the air outlet 6 is formed in the outlet unit 30.

The air-flow direction controller includes an air-flow direction controlling member 34 and an air-flow direction controlling member operating device 35. Herein, the air-flow direction controlling member 34 is formed to rotate along the axis of the man body 2 and, more particularly, along the axis of the outlet unit 30, so as to control the direction of the air being discharged through the air outlet 6. Also, the air-flow direction controlling member operating device 35 rotates the air-flow direction controlling member 34.

The air-flow direction controlling member 34 includes a left/right air-flow direction controlling member, which controls the direction of the air passing though the air outlet 6 in left/right directions, and an up/down air-flow direction controlling member, which controls the direction of the air passing though the air outlet 6 in up/down directions.

The air-flow direction controlling member operating device 35 may be connected to the left/right air-flow direction controlling member so that the left/right air-flow direction controlling member can rotate along the vertical axis. Alternatively, the air-flow direction controlling member operating device 35 may be connected to the up/ down air-flow direction controlling member so that the up/down air-flow direction controlling member can rotate along the horizontal axis.

Hereinafter, the air-flow direction controlling member 34 will be described as being rotatably fixed so that any one of the left/right air-flow direction controlling member and the up/down air-flow direction controlling member can open and close the air outlet 6. And, more specifically, the air-flow direction controlling member 34 will be described to have the up/down air-flow direction controlling member fixed to open and close the air outlet 6. Furthermore, the air-flow direction controlling member operating device 35 will be described to include an air-flow direction controlling motor, which is fixed to any one of the left and right sides of the outlet unit 30, thereby rotating the up/ down air-flow direction controlling member.

The main body 2 includes a ventilator 50, a heat exchanger 60, a controller 70, a filter 80, and a filter frame 90. More specifically, the ventilator 50 draws in (or sucks in) the air through the air inlet 4, so that the air can flow inside of the main body 2, and then discharges the processed air through the air outlet 6. The heat exchanger 60 performs heat exchange between the air sucked into the main body 2 and a refrigerant. The controller 70 controls the air conditioner. The filter 80 cleans the air sucked into the main body 2 through the air inlet 4. And, the filter 80 is mounted on the filter frame 90.

The ventilator 50 includes a fan motor 52 and a fan 54. Herein, the fan motor 52 is fixed to the sash 10 and, more particularly, to the motor installing unit 14 formed in the electric machinery room 13. The fan 54 is mounted on the rotation axis of the fan motor 52 and is positioned in the air-flow passage guide 12.

The fan 54 consists of a cross-flow fan being formed to extend from left to right in-between the air-flow passage guides 15, 16, and 17, and, more particularly, between the left/right passage guides 15 and 16.

The ventilator 50 further includes a motor cover 56 being mounted on the sash 10 so as to cover the fan motor 52.

The heat exchanger 60 is installed in an empty space of the main body 2 and, more particularly, in a rear-end side of the front portion of the front frame 20, so that the heat exchanger 60 can be positioned between the air inlet 4 and the fan 54. Furthermore, the heat exchanger 60 is installed so that the lower portion of the heat exchanger 60 can be placed above the drain unit 32.

The heat exchanger 60 includes a vertical portion 62, a forward tilted portion 64, and a backward tilted portion 66. More specifically, the vertical portion 62 is positioned vertically above the drain portion 32. The forward tilted portion 64 is positioned above the vertical portion 62, wherein the rear-end portion is tilted upwards. And, the backward tilted portion 66 is positioned above the forward tilted portion 64, wherein the rear-end portion is tilted downwards.

The controller 70 includes a control box 72, a main controller 74, and an insect attracting/eliminating unit controller 76. More specifically, the control box 72 is installed in the electric machinery room 13 of the main body 2. The main controller 74 is installed in the control box 72 and controls the fan motor 52 of the ventilator 50 and the shielding member operating device 35. Finally, the insect attracting/eliminating unit controller 76 controls the insect attracting/eliminating unit 100.

The ultrasonic generator controller 76 is connected to the main controller 74 through a first lead wire 77. And, the ultrasonic generator controller 76 is connected to the ultrasonic generator 100 through a second lead wire 78.

The filter frame 90 is installed to be positioned between the air inlet 4 and the heat exchanger 60. A filter installing room 92 is formed in the filter frame 90. Herein, air passes through the filter installing room 91 and the filter 80 is mounted (or installed) in the filter installing room 91.

The insect attracting/eliminating unit 100 attracts unwanted insects or pests existing in an indoor area that is to be air-conditioned by the air conditioner. Herein, the insect attracting/eliminating unit 100 may be installed on the front panel 28, which corresponds to the front portion of the main body 2. Alternatively, the insect attracting/ eliminating unit 100 may also be installed in a bottom surface of the front frame 20 or a bottom surface of the sash 10, which respectively correspond to the lower surface of the main body 2. Furthermore, the insect attracting/eliminating unit 100 may also be installed in the outlet unit 30, which is positioned between the front surface and the bottom surface of the main body 2.

The insect attracting/eliminating unit 100 may be installed on each of the left and right sides of the main body 2, wherein a left-side insect attracting/eliminating unit is installed on the left-side surface of the main body 2, and wherein a right-side insect attracting/eliminating unit is installed on the right-side surface of the main body 2, so as to cooperatively attract and eliminate the unwanted insects and/or pests.

The insect attracting/eliminating unit 100 may be fixed to the main body 2 so as to attract and eliminate insect and pests. Alternatively, the insect attracting/eliminating unit 100 may be formed to be protruded to the outside of the main body 2 only when an insect eliminating function is activated by the main body 2. In this case, when the insect eliminating function is deactivated, or when the air conditioner is turned off, the insect attracting/eliminating unit 100 is inserted back into the main body 2 so as to be protected. Furthermore, the insect attracting/eliminating unit 100 may also be rotatably installed in the main body 2 so as to attract and eliminate insects by rotating inside of the main body 2.

The main body 2 may include an insect attracting/eliminating unit moving device having a movable motor for moving the insect attracting/eliminating unit 100. The main body 2 may also include an insect attracting/eliminating unit rotating device having a rotatable motor for rotating the insect attracting/eliminating unit 100. Hereinafter, an example of the insect attracting/eliminating unit 100 being fixed to the main body 2 will be described according to the embodiment of the present invention.

Herein, the insect attracting/eliminating unit 100 may be installed in the main body 2 so as to be exposed to the outside. Alternatively, the insect attracting/eliminating unit 100 may also be installed to be covered and hidden by the air-flow direction controlling member 34, when the insect eliminating function is deactivated, or when the air conditioner is turned off, and the insect attracting/eliminating unit 100 may be installed in a position exposing the insect attracting/eliminating unit 100 to the outside of the main body 2, when the insect eliminating function is activated. In this example, description will be limited to the insect attracting/eliminating unit 100 being installed in the main body 2 so as to be exposed to the outside, thereby being capable of eliminating unwanted insects, regardless of the air-conditioner driving modes, such as a cool air-conditioning mode, a heated air-conditioning mode, a dehumidifying air-conditioning mode, and so on (hereinafter collectively referred to as the"air-conditioning mode").

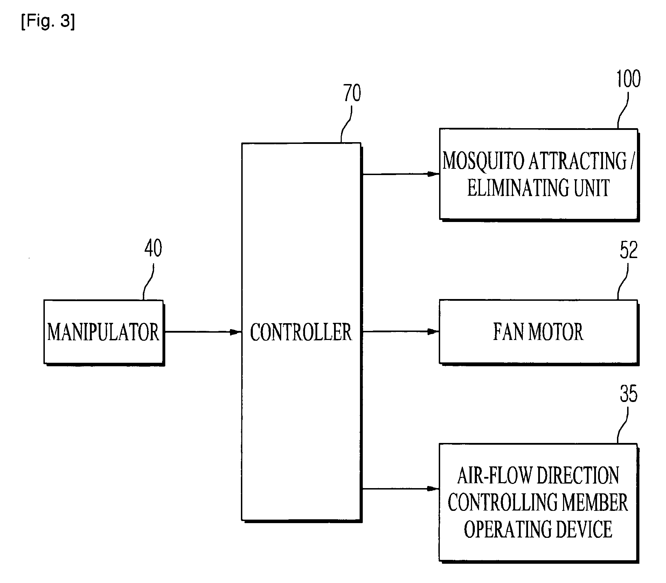

FIG. 3 illustrates a controlled block view showing a controlled structure according to the embodiment of the present invention.

Referring to FIG. 3, the air conditioner according to the embodiment of the present invention further includes a manipulator 40 that can manipulate the operation (or driving) of the main body 2 and that can also input the insect repelling mode. The controller 70 controls the fan motor 52 of the ventilator 40, the air-flow direction controlling member operating device 35, and the insect attracting/eliminating unit 100 based upon the manipulation of the manipulator 40.

When the insect repelling mode is inputted through the manipulator 40, the controller 70 supplies power to the insect attracting/eliminating unit 100 regardless of whether or not the main body 2 is operating the air-conditioning function.

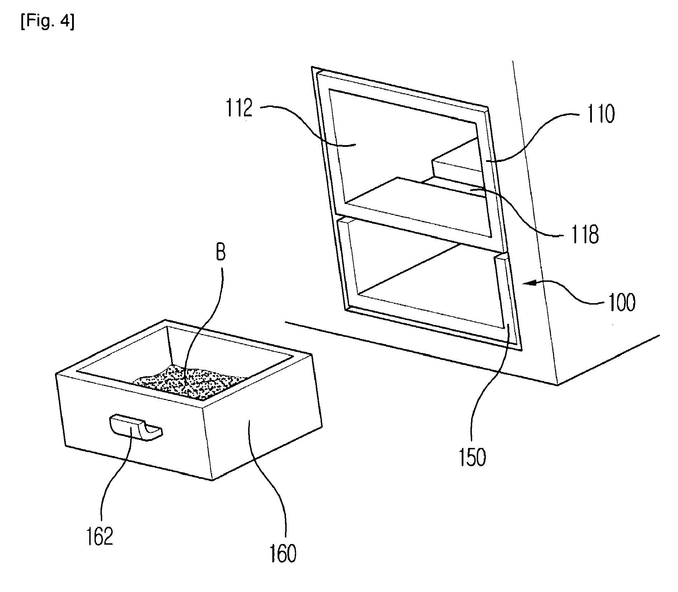

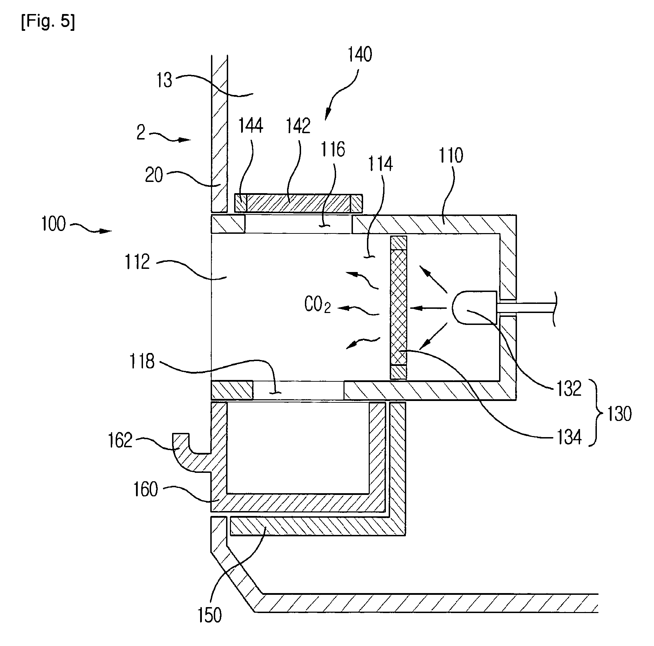

FIG. 4 illustrates a partial perspective view showing a detachably fixed structure of a collecting box according to an embodiment of the present invention. And, FIG. 5 illustrates a partial cross-sectional view of an insect (or pest) attracting device according to an embodiment of the present invention, wherein the insect attracting device has a carbon dioxide generator mounted therein

Referring to FIG. 4, the insect attracting/eliminating unit 100 includes an insect attractor, and an insect eliminator. Herein, the insect attractor generates at least one of a scent, light, odor, sound wave, and air element that insects prefer (or are attracted to), thereby attracting the unwanted insects or pests into the main body 2. The insect eliminator eliminates the insects attracted into the main body 2.

In the following description of the present invention, the insect attractor according to this embodiment of the present invention will be described as a carbon dioxide generator 130 generating an air element and, more particularly, carbon dioxide, which attracts mosquitoes in particular among the insects. Also, the insect eliminator according to this embodiment of the present invention will be described as an ultrasonic generator 140 generating ultrasonic waves, thereby eliminating the attracted insects.

The main body 2 is provided with a duct 110 for installing the insect attracting/ eliminating unit 100. Herein, the duct also functions as a transport path for the insects to be transported into the main body 2. A duct entrance 112 of the insect transport duct 110 is provide to open one side of the main body 2. And, an insect transport path 114 is formed inside of the duct entrance 112. The insect transport path 114 corresponds to a space which the insects attracted by the carbon dioxide generator 130 can pass through. Herein, the insect attractor and the ultrasonic generator 140 are equipped in the insect transport path 114.

The insect transport duct 110 configures an interior space of the insect transport path 114 and the main body 2. A communication hole 116 is provided on an upper portion of the insect transport path 114. The communication hole 116 corresponds to a hole allowing the ultrasonic waves generated from the ultrasonic generator 140 to pass through. Herein, depending upon the design of the air conditioner according to the present invention, if the ultrasonic generator 140 is provided on the inner surface of the insect transport duct 110, the communication hole 116 may be omitted from the structure.

A collection hole 118 is formed on the bottom surface of the insect transport duct 110. The collection hole 118 is a hole which the insects eliminated by the ultrasonic generator 140 passes through, so as to fall into the insect collection box 160.

It is preferable that the insect transport duct 110 is installed on one side of the air-flow passage and the mounting room 13 formed inside of the main body 2. It is also preferable that the insect transport duct 110 is installed in the mounting room 130 so as to minimize the flow resistance of the air-flow passage and also to facilitate the connection of the carbon dioxide generator 130 and the insect eliminator to the controller 70.

A drain passage (not shown), such as a water draining hose, which guides water generated from a photocatalyst filter 134 outside of the air conditioner or which guides the water generated from the photocatalyst filter 134 to the drain unit 32, may be connected to the insect transport duct 110.

It is preferable that the insect transport path 114 is formed in a structure enabling the insects eliminated by the insect eliminator to be collected in the insect collection box 160 without bouncing into the control box 72 located in the main body 2.

The carbon dioxide generator 130 is installed in the insect transport path 114. And, the ultrasonic generator 140, which corresponds to the insect eliminator, is provided between the duct entrance 112 and the carbon dioxide generator 130.

The carbon dioxide generator 130 is located in the main body 2 and generates carbon dioxide so as to attract insects into the main body 2. Herein, the carbon dioxide generator 130 includes a photocatalyst filter 134 and a light illuminator 132. More specifically, the photocatalyst filter 134 is configured of a material accelerating a chemical reaction that is caused by light emission. And, the light illuminator 132 illuminates (or emits) light to the photocatalyst filter 134 so that the photocatalyst filter 134 can generate carbon dioxide. Any contaminated organic compound existing in the air is oxidized and decomposed by the photocatalyst filter 134, thereby becoming water and carbon gas.

Herein, the light illuminator 132 consists of an ultraviolet (UV) ray lamp or a fluorescent lamp that is installed to emit light rays and, more particularly, ultraviolet (UV) light rays to the photocatalyst filter 134. However, since insects prefer UV light rays in addition to carbon dioxide, it is also preferable that the light illuminator 132 is configured of a UV-ray lamp. Accordingly, the insects are attracted by the carbon dioxide generated from the photocatalyst filter 134 and by the light rays emitted from the UV lamp, so as to be guided towards the area where the carbon dioxide generator 130 is located.

The photocatalyst filter 134 may correspond to a titanium dioxide (TiO₂) photocatalyst filter. Herein, the photocatalyst filter may be formed to have a meshed shape or a honeycomb shape. Alternatively, the photocatalyst filter 134 may also be formed of a parent material being coated with a titanium dioxide photocatalyst on a substrate or a titanium dioxide photocatalyst being formed to have a meshed structure or a honeycomb structure.

The carbon dioxide generator 130 may deodorize the indoor air while purifying (or cleaning) the indoor air. Simultaneously, as the carbon dioxide level becomes relatively higher in the surrounding area of the photocatalyst filter 134, insects may be attracted by the increased carbon dioxide level.

The carbon dioxide generator 130 is controlled by the controller 70 and, more particularly, by the insect attracting/eliminating unit controller 76. Accordingly, when power is supplied to the light illuminator 132 by the controller 70, the carbon dioxide level becomes higher in the surrounding area of the photocatalyst filter 134. At this point, insects are attracted towards the photocatalyst filter 134 and the light illuminator 132.

The ultrasonic generator 140 is provided in the insect transport duct 110. The ultrasonic generator 140 may be installed to be in correspondence with the communication hole 116. Alternatively, depending upon the design of the present invention, the ultrasonic generator 140 may be mounted (or installed) on the inner surface of the insect transport duct 110.

The ultrasonic generator 140 may be configured by including a speaker 142 converting the electrical signals to sonic wave (or sound wave) signals, thereby outputting the converted signals to the speaker 142. The speaker 142 may be realized with a piezoelectric element. Herein, the speaker 142 oscillates in accordance with inputted pulse signals, thereby outputting the sonic wave signals. The speaker 142 may be provided in the insect transport duct 110 by using a speaker holder 144.

The ultrasonic generator 140 may output sonic wave (or sound wave) signals of a specific frequency band, so as to eliminate unwanted insects (or pests). Herein, examples of the unwanted insects (or pests) may include flies, mosquitoes, mites, moths, fruit flies, and so on.

More specifically, the ultrasonic generator 140 generates ultrasonic waves. Herein, ultrasonic waves refer to sonic waves having a frequency higher than the audio frequency of 20 kilohertz (kHz) that such ultrasonic waves cannot be heard by the human ear.

According to the embodiment of the present invention, the ultrasonic generator 140 generates ultrasonic waves of a specific frequency band high enough to exterminate insects depending upon the type of insects. Herein, it is preferable that the frequency band high enough to exterminate insects has a frequency ranging from 20 kHz to 100 kHz.

More specifically, within the above-mentioned frequency band range, since different frequency bands are required to repel each insect type, such as flies, mosquitoes, mites, moths, fruit flies, and so on, the ultrasonic generator 140 may be configured to emit (or generate) sonic waves having different frequency waves depending upon the insect type.

For example, when an ultrasonic generator 130 using a power of 12 volts in a closed space of 190*190*190 cm² generates a frequency ranging from 20 kHz to 100 kHz, after a period of 24 hours, the Dengue mosquito marks a death rate of 74%, and the Malaria mosquito marks a death rate of 100%. When compared with the natural death rate (approximately 7% to 8%) of mosquitoes that are not exposed to ultrasonic waves under the same air-conditioned atmosphere, the above-mentioned death rates proves the fact that ultrasonic waves may act as a fatal factor that can lead to the death and extermination of mosquitoes.

Furthermore, the ultrasonic generator 140 may be configured to alternately generate ultrasonic waves having different frequencies at predetermined intervals, thereby preventing the insects from developing a tolerance (or resistance) to a particular frequency or being capable of repelling different types of insects at the same time.

A box accommodating room 150 is provided in the main body 2. The box accommodating room 150 is formed at the lower portion of the insect transport duct 110. And, the insect collection box 160 is detachably fixed to the box accommodating room 150.

The insect collection box 160 is positioned in the box accommodating room 150, so that the insects eliminated by the insect eliminator, *i.e.,* the ultrasonic generator 140 can be collected and discarded. The insect collection box 160 is provided in a box shape having its upper surface opened and having a handle provided on the front surface thereof. The insect collection box 160 communicates with (or is connected to) the insect transport path 114 through the collection hole 118. Herein, it is preferable that the ultrasonic generator 140 and the insect collection box 160 are provided to face into each other in positions closer to the entrance of the insect transport duct 110 as compared to the insect attractor.

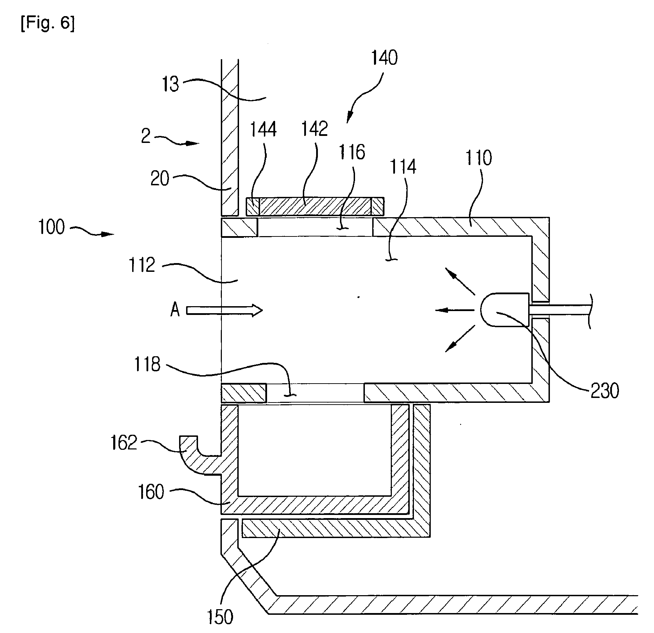

FIG. 6 illustrates a partial cross-sectional view of an insect (or pest) attracting device according to an embodiment of the present invention, wherein the insect attracting device has a light-emitting diode mounted therein.

Referring to FIG. 6, the insect attractor may be configured of a light-emitting diode (LED) 230, which generates (or emits) light when an electric current is supplied to its joint. Generally, mosquitoes tend to be attracted to light, and the light rays being emitted from the light-emitting diode (LED) 230 attract the mosquitoes. Most particularly, mosquitoes show the tendency of being attracted more to white light rays or blue light rays. Therefore, it is preferable that the light-emitting diode (LED) 230 is configured to emit white light rays or blue light rays.

Hereinafter, the air conditioner according to the embodiment of the present invention having the above-described structure will now be described in detail.

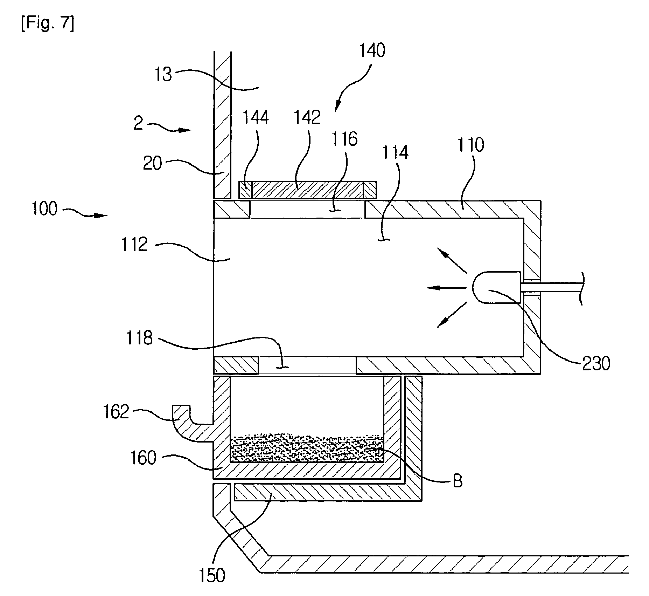

FIG. 7 illustrates a partial cross-sectional view of a collection box having insects trapped therein according to an embodiment of the present invention.

Referring to FIG. 7, when the insect eliminating mode is inputted through the manipulator 40, the controller 70 supplies power to the carbon dioxide generator 130, which corresponds to the insect attractor, and also supplies power to the ultrasonic generator 140, which corresponds to the insect eliminator, regardless of the input of the air-conditioning mode.

When power is supplied to the carbon dioxide generator 130, the UV lamp, which corresponds to the light illuminator 132, emits UV light rays towards the photocatalyst filter 134. And, the photocatalyst filter 134 oxidizes and decomposes organic compounds by using the UV light rays emitted from the light illuminator 132, thereby changing the organic compounds into water and carbon gas. Accordingly, the carbon dioxide level in the area surrounding the photocatalyst filter 134 becomes relatively higher than that of the indoor air. Thereafter, the carbon dioxide is discharged to the indoor air through the insect transport path 114.

Also, when power is supplied to the ultrasonic generator 140, the piezoelectric element oscillates, thereby generating ultrasonic rays. The ultrasonic generator 140 may generate ultrasonic waves having a frequency ranging from 20 kHz to 100 kHz towards the insect transport path 114.

When operating the carbon dioxide generator 130 and the ultrasonic generator 140, as described above, insects existing in the indoor air, especially mosquitoes are attracted by the carbon dioxide generated from the carbon dioxide generator 130 so as to be gathered in the main body 2. Thereafter, the attracted insects are transported towards the insect transport path 114. At this point, the mosquitoes may be eliminated by the ultrasonic waves generated from the ultrasonic generator 140.

The insects, which are eliminated by the ultrasonic waves generated from the ultrasonic generator 140, fall into and through the collection hole 118 so as to be collected in the insect collection box 160.

If the above-described insect eliminating mode continues to be activated, a large number of eliminated insects will be accumulated in the insect collection box 160. Subsequently, the user may pull the insect collection box 160 forward out of the accommodation room and may empty the insect collection box 160, thereby maintaining the insect collection box 160 in a clean state.

In an embodiment where the insect attractor is configured of the light-emitting diode (LED) 230, with the exception for the method of attracting the insects, the remaining structure and operation is identical to those of the embodiment using the carbon dioxide generator 130 as the insect attractor. Therefore, detailed description of identical elements and operations will be omitted for simplicity.

Hereinafter, the air conditioner according to the other embodiment of the present invention having the above-described structure will now be described in detail.

In this embodiment of the present invention, the structure or shape of the insect transport path is different from those of the previous embodiment of the present invention. Therefore, detailed description of elements and operations identical to those shown in the example of FIG. 1 to FIG. 7 will be omitted for simplicity.

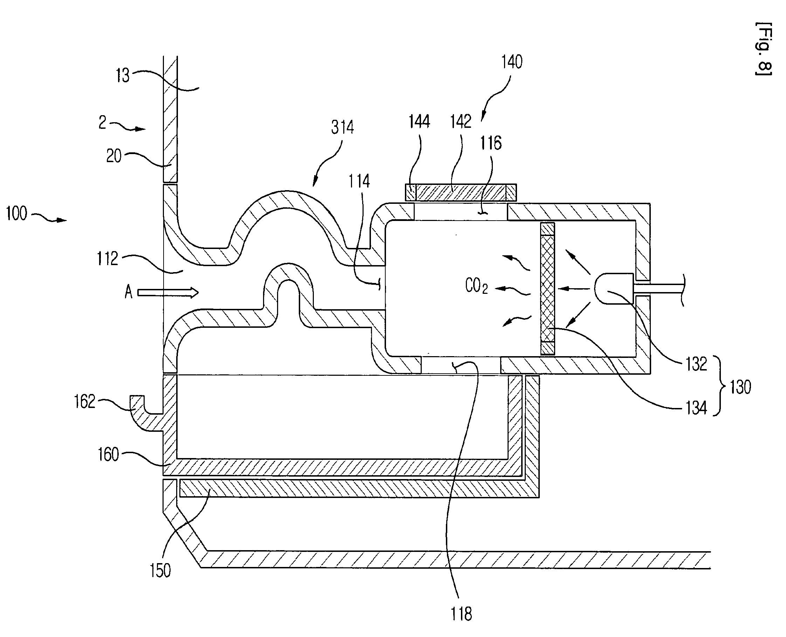

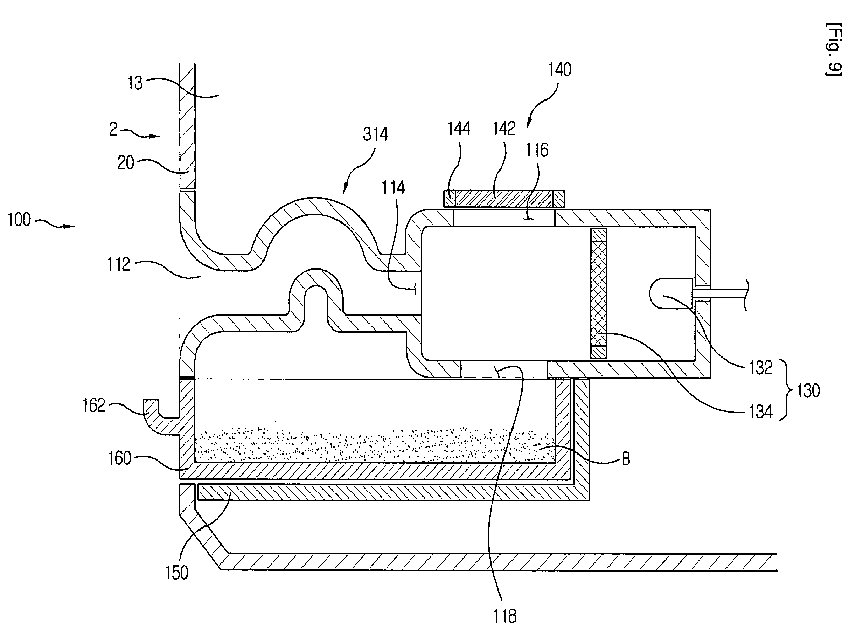

FIG. 8 illustrates a cross-sectional view showing an insect (or pest) attracting/ eliminating device according to another embodiment of the present invention. And, FIG. 9 illustrates a partial cross-sectional view of a collection box having insects trapped therein according to another embodiment of the present invention.

## Claims

1. An air conditioner, comprising:
a main body (2) including an air inlet (4) for drawing in external air and an air outlet (6) for discharging conditioned air to the outside;
an insect attracting unit (100) provided in the main body (2) and configured to attract unwanted insects to the main body (2);
an ultrasonic generator (140) provided in the main body (2) and generating ultrasonic waves towards the attracted insects by using an oscillation of a piezoelectric element; and
a controller (70) controlling the insect attracting unit (100) and the ultrasonic generator (140),
a duct (110) opening one side of the main body (2) and provided inside the main body (2),
wherein the insect attracting unit (100) is provided on one side of the duct (110) and configured to attract unwanted insects into the duct (110),
an insect collection box (160) being detachably fixed inside the main body (2) so as to be accommodated in a lower area of the duct (110) and communicating with the duct (110), when the insect collection box (160) is accommodated in the main body (2).

2. The air conditioner of claim 1, wherein the insect attracting unit (100) corresponds to a carbon dioxide generator (130).

3. The air conditioner of claim 2, wherein the carbon dioxide generator (130) comprises:
a photocatalyst filter (134); and
a light illuminator (132) emitting light rays towards the photocatalyst filter (134).

4. The air conditioner of claim 3, wherein the photocatalyst filter (134) includes titanium dioxide.

5. The air conditioner of any one of claims 1-4, wherein the insect attracting unit (100) corresponds to a light-emitting diode (LED) (230) emitting light rays when an electric current is supplied to its joint.

6. The air conditioner of claim 5, wherein the light-emitting diode (LED) (230) emits white light rays or blue light rays.

7. The air conditioner of any one of claims 1-6, wherein the controller (70) controls the ultrasonic generator (140), so that the ultrasonic generator (140) can generate ultrasonic waves having a predetermined plurality of frequencies at predetermined intervals in a predetermined order.

8. The air conditioner of claim 7, wherein the ultrasonic generator (140) generates ultrasonic waves into an inner space within the duct (110) by using an oscillation of a piezoelectric element.

9. The air conditioner of claim 8, wherein the ultrasonic generator (140) and the insect collection box (160) are positioned to be closer to an entrance of the duct (110) as compared to the insect attracting unit (100), and

10. The air conditioner of claim 9, wherein the ultrasonic generator (140) and the insect collection box (160) are positioned to face into each other.

11. The air conditioner of claim 8, wherein the ultrasonic generator (140) is placed in an upper area of the duct (110), and wherein a communication hole 116) is provided in an upper surface of the duct (110) so as to guide the ultrasonic waves generated from the ultrasonic generator (140) into the duct (110).

12. The air conditioner of any one of claims 8 to 11, wherein a light shield is provided in the duct (110), wherein the light shield is provided to prevent light rays emitted from the insect attracting unit (100) from being exposed to the outside.

13. The air conditioner of claim 12, wherein the light shield is provided between the entrance of the duct (110) and the carbon dioxide generator (130) and being curved at least once or more.

## Patentansprüche

1. Klimaanlage, die Folgendes umfasst:
einen Hauptkörper (2), der einen Lufteinlass (4) zum Ansaugen von Außenluft und einen Luftauslass (6) zum Abgeben gekühlter Luft nach außen umfasst;
eine Einheit (100) zum Anlocken von Insekten, die in dem Hauptkörper (2) vorgesehen ist und konfiguriert ist, unerwünschte Insekten zu dem Hauptkörper (2) anzulocken;
einen Ultraschallgenerator (140), der in dem Hauptkörper (2) vorgesehen ist und Ultraschallwellen in Richtung der angelockten Insekten unter Verwendung einer Schwingung eines piezoelektrischen Elements erzeugt; und
eine Steuerung (70), die die Einheit (100) zum Anlocken von Insekten und den Ultraschallgenerator (140) steuert,
einen Schacht (110), der eine Seite des Hauptkörpers (2) öffnet und in dem Hauptkörper (2) vorgesehen ist,
wobei die Einheit (100) zum Anlocken von Insekten an einer Seite des Schachts (110) vorgesehen ist und konfiguriert ist, unerwünschte Insekten in den Schacht (110) zu locken,
ein Insektensammelfach (160), das in dem Hauptkörper (2) abnehmbar so befestigt ist, dass es in einem unteren Bereich des Schachts (110) untergebracht ist und mit dem Schacht (110) in Verbindung ist, wenn das Insektensammelfach (160) in dem Hauptkörper (2) untergebracht ist.

2. Klimaanlage nach Anspruch 1, wobei die Einheit (100) zum Anlocken von Insekten einem Kohlenstoffdioxidgenerator (130) entspricht.

3. Klimaanlage nach Anspruch 2, wobei der Kohlenstoffdioxidgenerator (130) Folgendes umfasst:
einen Photokatalysefilter (134); und
eine Beleuchtungseinrichtung (132), die Lichtstrahlen in Richtung des Photokatalysefilters (134) ausstrahlt.

4. Klimaanlage nach Anspruch 3, wobei der Photokatalysefilter (134) Titandioxid umfasst.

5. Klimaanlage nach einem der Ansprüche 1-4, wobei die Einheit (100) zum Anlocken von Insekten einer Leuchtdiode (LED) (230) entspricht, die Lichtstrahlen aussendet, wenn ihrem Anschluss ein elektrischer Strom zugeführt wird.

6. Klimaanlage nach Anspruch 5, wobei die Leuchtdiode (230) weiße Lichtstrahlen oder blaue Lichtstrahlen ausstrahlt.

7. Klimaanlage nach einem der Ansprüche 1-6, wobei die Steuerung (70) den Ultraschallgenerator (140) so steuert, dass der Ultraschallgenerator (140) Ultraschallwellen erzeugen kann, die mehrere vorher festgelegte Frequenzen in vorher festgelegten Abständen in einer vorher festgelegten Reihenfolge haben.

8. Klimaanlage nach Anspruch 7, wobei der Ultraschallgenerator (140) Ultraschallwellen in einen Innenraum in dem Schacht (110) unter Verwendung einer Schwingung eines piezoelektrischen Elements erzeugt.

9. Klimaanlage nach Anspruch 8, wobei der Ultraschallgenerator (140) und das Insektensammelfach (160) so positioniert sind, dass sie im Vergleich zu der Einheit (100) zum Anlocken von Insekten näher bei einem Eingang des Schachts (110) positioniert sind.

10. Klimaanlage nach Anspruch 9, wobei der Ultraschallgenerator (140) und das Insektensammelfach (160) so positioniert sind, dass sie einander gegenüber liegen.

11. Klimaanlage nach Anspruch 8, wobei der Ultraschallgenerator (140) in einem oberen Bereich des Schachts (110) angeordnet ist und wobei ein Kommunikationsloch (116) in einer oberen Oberfläche des Schachts (110) so vorgesehen ist, dass die von dem Ultraschallgenerator (140) erzeugten Ultraschallwellen in den Schacht (110) geleitet werden.

12. Klimaanlage nach einem der Ansprüche 8 bis 11, wobei eine Lichtabschirmung in dem Schacht (110) vorgesehen ist, wobei die Lichtabschirmung vorgesehen ist, um zu verhindern, dass von der Einheit (100) zum Anlocken von Insekten ausgestrahlte Lichtstrahlen nach außen dringen.

13. Klimaanlage nach Anspruch 12, wobei die Lichtabschirmung zwischen dem Eingang des Schachts (110) und dem Kohlenstoffdioxidgenerator (130) vorgesehen ist und wenigstens einmal oder mehrfach gebogen ist.

## Revendications

1. Appareil de conditionnement d'air, comprenant :
un corps principal (2) incluant une entrée d'air (4) pour aspirer de l'air externe et une sortie d'air (6) pour décharger de l'air conditionné vers l'extérieur ;
une unité d'attraction d'insectes (100) prévue dans le corps principal (2) et configurée pour attirer des insectes non désirés vers le corps principal (2) ;
un générateur d'ultrasons (140) prévu dans le corps principal (2) et générant des ondes ultrasonores vers les insectes attirés en utilisant une oscillation d'un élément piézoélectrique ; et
un contrôleur (70) qui commande l'unité d'attraction d'insectes (100) et le générateur d'ultrasons (140),
un conduit (110) ouvert sur un côté du corps principal (2) et prévu à l'intérieur du corps principal (2),
dans lequel l'unité d'attraction d'insectes (100) est prévue sur un côté du conduit (110) et configurée pour attirer des insectes non désirés jusque dans le conduit (110),
une boîte de collecte d'insectes (160) qui est fixée de manière détachable à l'intérieur du corps principal (2) de manière à être logée dans une zone inférieure du conduit (110) et qui communique avec le conduit (110) quand la boîte de collecte d'insectes (160) est logée dans le corps principal (2).

2. Appareil de conditionnement d'air selon la revendication 1, dans lequel l'unité d'attraction d'insectes (100) correspond à un générateur de dioxyde de carbone (130).

3. Appareil de conditionnement d'air selon la revendication 2, dans lequel le générateur de dioxyde de carbone (130) comprend :
un filtre de photocatalyse (134) ; et
un illuminateur de lumière (132) qui émet des rayons de lumière vers le filtre de photocatalyse (134).

4. Appareil de conditionnement d'air selon la revendication 3, dans lequel le filtre de photocatalyse (134) inclut du dioxyde de titane.

5. Appareil de conditionnement d'air selon les revendications 1 à 4, dans lequel l'unité d'attraction d'insectes (100) correspond à une diode électroluminescente (LED) (230) qui émet des rayons de lumière quand un courant électrique est fourni à sa jonction.

6. Appareil de conditionnement d'air selon la revendication 5, dans lequel la diode électroluminescente (LED) (230) émet des rayons de lumière blanche ou des rayons de lumière bleue.

7. Appareil de conditionnement d'air selon l'une quelconque des revendications 1 à 6, dans lequel le contrôleur (70) commande le générateur d'ultrasons (140) de telle façon que le générateur d'ultrasons (140) peut générer des ondes ultrasonores ayant une pluralité prédéterminée de fréquences à intervalles prédéterminés dans un ordre prédéterminé.

8. Appareil de conditionnement d'air selon la revendication 7, dans lequel le générateur d'ultrasons (140) génère des ondes ultrasonores dans un espace intérieur dans le conduit (110) en utilisant une oscillation d'un élément piézoélectrique.

9. Appareil de conditionnement d'air selon la revendication 8, dans lequel le générateur d'ultrasons (140) et la boîte de collecte d'insectes (160) sont positionnés pour être plus proches d'une entrée du conduit (110) par comparaison à l'unité d'attraction d'insectes (100)

10. Appareil de conditionnement d'air selon la revendication 9, dans lequel le générateur d'ultrasons (140) et la boîte de collecte d'insectes (160) sont positionnés pour se faire mutuellement face.

11. Appareil de conditionnement d'air selon la revendication 8, dans lequel le générateur d'ultrasons (140) est placé dans une zone supérieure du conduit (110), et dans lequel un trou de communication (116) est prévu dans une surface supérieure du conduit (110) de manière à guider les ondes ultrasonores générées depuis le générateur d'ultrasons (140) jusque dans le conduit (110).

12. Appareil de conditionnement d'air selon l'une quelconque des revendications 8 à 11, dans lequel un écran vis-à-vis de la lumière est prévu dans le conduit (110), dans lequel l'écran vis-à-vis de la lumière est prévu pour empêcher aux rayons lumineux émis depuis l'unité d'attraction d'insectes (100) d'être exposés vers l'extérieur.

13. Appareil de conditionnement d'air selon la revendication 12, dans lequel l'écran vis-à-vis de la lumière est prévu entre l'entrée du conduit (110) et le générateur de dioxyde de carbone (130), et est incurvé au moins une fois ou plus.
